# EUROPEAN PATENT SPECIFICATION

(11) **EP 2 368 950 B1**
(45) Date of publication and mention of the grant of the patent: **16.01.2013**
(21) Application number: 10305301.3
(22) Date of filing: 25.03.2010
(51) Int. Cl.: C09D 183/04, C09D 201/10

(54) **Heat curable compositions for tintable abrasion resistant transparent hard-coatings**
Wärmehärtbare Zusammensetzungen für färbbare, abriebfeste, transparente Hartbeschichtungen
Compositions durcissables par la chaleur pour revêtements durs, transparents, résistants à l'abrasion et pouvant être teintés

(43) Date of publication of application: 28.09.2011
(73) Proprietor: ESSILOR INTERNATIONAL (Compagnie Générale d'Optique), 94220 Charenton le Pont (FR)
(72) Inventor: Song, Lixin, 94220, Charenton-le-Pont (FR); THEO, Puat Wen, 94220, Charenton-le-Pont (FR)
(74) Representative: Cabinet Plasseraud

(56) References cited:
- EP-A1- 1 041 123
- EP-A1- 1 162 245
- EP-A2- 0 407 174
- EP-B1- 0 526 975
- EP-B1- 1 041 123
- US-A- 4 355 135
- US-A1- 2007 021 523
- US-A1- 2007 104 968
- US-B1- 7 097 704
- US-B2- 7 265 179

## Description

The present invention relates to heat-curable silane-based coating compositions, to transparent tintable hard-coatings obtained therefrom, and to optical articles, in particular ophthalmic lenses, containing such hard-coatings.

Ophthalmic lenses of transparent organic material (organic glass) are lighter and less brittle than mineral glass and are now widely used. One of the main inconveniences of organic glass is its far lower resistance to scratching and abrasion. Ophthalmic lenses made of thermoplastic or thermosetting polymers are therefore generally protected by applying a thermocurable or photocurable coating composition, for example based on alkoxysilanes and silica, and polymerising the alkoxysilanes in the presence of suitable catalysts.

When such organic glasses are made of non-tintable materials, such as thermoplastic polycarbonates, the hard-coating should further be easily tintable by immersion in a dying bath.

Most of the prior art tintable hard-coatings are however still lacking abrasion resistance when compared to mineral glass.

US 5,013,608 for example discloses tintable, abrasion resistant coating compositions based on colloidal silica, epoxyfunctional alkoxysilanes, multifunctional crosslinking agents and selected tintability enhancing agents.

Although the coating compositions described in these prior art documents, such as the product TC 332 sold by SDC, have a rather satisfactory tintability, their ISTM Bayer abrasion resistance unfortunately does not exceed about 1 - 1.3.

The Applicant now has developed particular epoxy-functional alkoxysilane-based coating compositions which have both excellent tintability and ISTM Bayer abrasion resistance significantly higher than the known compositions. The coating compositions of the present invention, unlike the ones disclosed in the above references, are free of any multifunctional cross-linking agent for the epoxy groups. They further use a tintability enhancing compound which is copolymerizable with the other ingredients of the composition and which up to now has never been used for the same purpose.

The present invention is drawn to a heat-curable coating composition which, upon curing, forms a transparent tintable abrasion-resistant coating, said heat-curable coating composition comprising, in an aqueous or hydro-organic solvent, the following components (A) to (D):
(A) a hydrolysate of an epoxy-functional silane compound containing at least two alkoxy groups,
(B) colloidal silica having an average particle diameter of 1 to 100 µm,
(C) an aluminium chelate compound of formula

   Al(O-C₁₋₄ alkyl)ₙY₃₋ₙ

   wherein n is 0, 1 or 2 and Y is a ligand selected from the group consisting of
   M-C(=O)-CH₂-C(=O)-M and
   M-C(=O)-CH₂-C(=O)O-M,
   wherein each M is independently a C₁-₄ alkyl group, and
(D) a hydrolysate of a silylated poly(tetrahydrofurane) of formula (Ia) or (Ib) 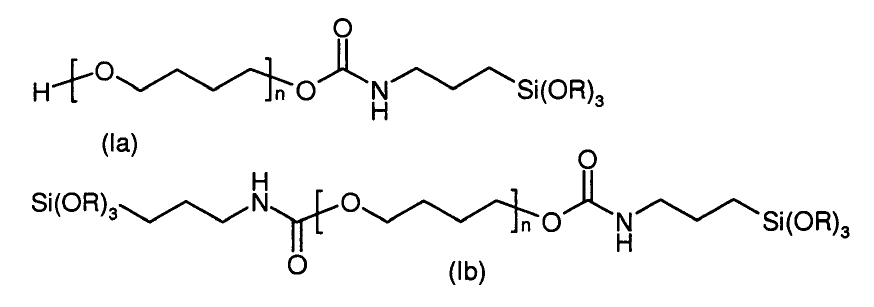
wherein n is an integer selected from 10 to 20 and each R is independently a C₁₋₅ alkyl group, preferably a methyl or ethyl group, or a C₁₋₅ acyl group,
said heat-curable composition not containing any multifunctional cross-linking agents selected from the group consisting of multifunctional carboxylic acids and multifunctional anhydrides.

The present invention is also drawn to a method for forming an abrasion-resistant hard-coating on a transparent substrate, preferably on a transparent organic substrate, and to an optical article obtained by such a method, said article comprising a clear, insoluble hard-coating resulting from the curing of the above heat-curable composition.

The first ingredient (Component (A)) of the composition is a hydrolysate of an epoxy-functional silane compound containing at least two alkoxy groups. The epoxy bearing group should not be cleavable from the Si atom during the hydrolysis/polymerisation reaction and is preferably bonded to the central Si atom of the alkoxysilane via a Si-C bond. Said epoxy group may be a glycidyl group or an epoxy group on a cycloalkyl residu, such as 3,4-epoxycyclohexyl. It is preferably a glycidyl group.

The alkyl moiety of the at least two alkoxy groups is a lower alkyl having from 1 to 6, preferably from 1 to 4 carbon atoms. Most preferred alkoxy groups are methoxy and ethoxy.

In a preferred embodiment, the hydrolysate of an epoxy-functional silane compound is selected from a hydrolysate of a silane compound containing three alkoxy groups directly bonded to the silicon atom and one epoxy-functional group bonded to the silicon atom via a Si-C bond. Said epoxy-functional silane compound has advantageously the following formula 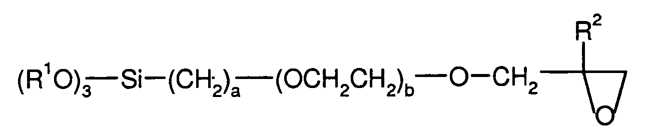 wherein each R¹ is independently a C₁₋₄ alkyl group, preferably a methyl or ethyl group, R² is a methyl group or hydrogen atom, a is an integer of from 1 to 6, and b is 0, 1 or 2.

The most preferred epoxy-functional silane compound for the purpose of the present invention is γ-glycidoxypropyltrimethoxysilane.

Component (A) is present in the heat-curable coating compositions in an amount of from 5 to 25 % by weight, preferably of from 10 to 20 % by weight, relative to the total uncured composition.

The amount of component (A) can further be defined by means of the (A)/(B) weight ratio which is advantageously comprised between 0.1 and 1, preferably between 0.2 and 0.8 and most preferably between 0.25 and 0.5.

Component (B) is essential for providing the final cured coatings with good hardness and abrasion resistance. However when its proportion in the final hard coating is too high, the resulting coating becomes less abrasion resistant. Component (A) when used without component (B) leads to hard but brittle coatings. Addition of colloidal silica provides flexibility and thereby better abrasion resistance. However when the colloid content is too high, the coating's adhesion to the underlying support will become poor. The amount of colloidal silica in the heat-curable coating composition of the present invention advantageously ranges from 10 to 30 % by weight, preferably from 15 to 25 % by weight, relative to the total weight of the composition (including the solvent phase). The amount of colloidal silica expressed relative to the total solids content of the composition is comprised between about 40 % and 60 %, more preferably between 45 and 55 %.

If desirable for the purpose of increasing the refractive index of the final hard coating, up to 20 % of the colloidal silica forming Component (B) may be replaced by one or more colloidal metal oxides selected, for example, from the group consisting of titania, zirconia, tin oxide, animony oxide, iron oxide, lead oxide, and bismuth oxide.

Component (C) catalyzes the condensation reaction between the silanol groups of Components (A), (B), (D), and (E) if present, during the heating step of the preparation method. It should be present in an amount ranging from 0.2 to 2 % by weight, preferably from 0.5 to 1.5 % by weight, relative to the total weight of the heat-curable composition. Exemplary Components (C) include aluminum acetylacetonate, aluminum ethylacetoacetate, aluminum ethylacetoacetate bisacetylacetonate, aluminum di-n-bisethylacetoacetate, aluminum di-butoxide monoethylacetoacetate, aluminum di-isopropoxide monomethylacetoacetate, or mixtures thereof.

Component (D) is responsible for good tintability of the resulting hard coat. The higher its concentration in the coating composition and in the final cured coating, the easier the coated optical articles are tinted with hydrophilic dyes. However, at too high concentrations of Component (D) the resulting hard coatings suffer from insufficient abrasion resistance.

The Applicant has noted that the use of coating compositions containing from 2 to about 20 %, preferably 4 to 18 % and even more preferably 5 to 15 % % by weight of Component (D) leads to hard coatings having both good tintability and excellent abrasion and scratch resistance. The amount of Component (D) expressed relative to the total solids content of the composition should be comprised between about 4 % and 40 % by weight, more preferably between 10 and 30 % by weight.

Component (D) is a polytetrahydrofurane polymer (PTHF) end-capped with silylated groups via urethane linkages. It may be prepared by reacting hydroxyl terminated polytetrahydrofurne with γ-isocyanatopropyltrialkoxysilane. The weight average molecular weight of the starting PTHF is advantageously comprised between 150 and 2000, preferably between 200 and 1200. For a given content of Component (D), the higher the molecular mass of the PTHF, the better the tintability of the resulting hard coat. However, the abrasion resistance of the coatings slightly decreases as a function of molecular weight of the silylated PTHF.

Component (D) is preferably a hydrolysate of a compound of formula (Ib) having both ends capped with silane groups. Compounds of formula (Ia) or (Ib) are known as such (CAS 288307-42-6 and CAS 144126-55-6 for the di-silylated PTHF, CAS 131744-23-5 for the mono-silylated PTHF). To the Applicant's best knowledge, they have never been used in silane-based transparent hard-coatings.

The heat-curable coating composition of the present invention may further comprise an additional Component (E), said component being a difunctional silane comprising only two polymerisable silanol groups. Component (E) is selected from at least one hydrolysate of a silane compound of formula SiT₂Z₂ where each T is an organic group which, upon hydrolysis, gives a silanol group, preferably a C₁-₁₀ alkoxy group, and each Z is an organic group non reactive with regard to the components of the composition, bonded to the silicon atom via a Si-C bond, preferably a C₁₋₁₀ alkyl group or a C₆₋₁₀ aryl group.

Dimethyldimethoxysilane, dimethyldiethoxysilane and methylphenyldimethoxysilane are exemplary silane compounds of formula SiT₂Z₂. When present, Component (E) is preferably used in an amount ranging from 1 to 10 % by weight relative to the total coating composition. The amount of component (E) expressed relative to the total solids content of the composition should be comprised between about 2 and 20 % by weight.

The above ingredients are dispersed or dissolved in an aqueous or hydro-organic solvent phase. Said solvent phase contains at least 1 weight %, preferably at least 2 weight % of water. The water may result from the starting condensation reaction of the silanols formed during the hydrolysis. It may also be added together with each of the ingredients of the composition, in particular with hydrolysates (A) and (D). The presence of water is essential to guarantee good storage stability of the coating composition and to prevent early and undesirable viscosity increase of the composition before application to the substrate.

The organic fraction of the solvent phase is a water-miscible solvent having preferably a boiling point at atmospheric pressure of between 70 °C and 140 °C so that it may evaporate easily during the curing step. Suitable organic solvents are selected for example from the group consisting of methanol, ethanol, isopropanol, ethyl acetate, methylethylketone or tetrahydropyrane.

The compositions can further include various additives, such as surfactants, to improve spreading of the composition over the surface to be coated, or UV absorbers.

The coating composition of the present invention should have a total solids content comprised between 30 and 70 % by weight, preferably between 40 and 60 % by weight.

The coating compositions of the present invention are prepared by
- hydrolysing the epoxy-functional silane compound containing at least two alkoxy groups (component (A)), the compounds of formula (Ia) and/or (Ib) (component (D)), and the compound of formula SiT₂Z₂ (component (E)), if present, and
- mixing said hydrolysates with a suspension of colloid silica (component (B)) and the curing catalyst (component (C)).

Hydrolysis of components (A), (D) and (E) may be carried out simultaneously or successively in a single container or separately. The mixing order of the different components is not critical for the present invention, though the curing catalyst is preferably added after mixing of the other ingredients. The final coating compositions are then stored at low temperature, preferably at less than 10 °C, and heated to room temperature shortly before coating.

Optical articles having an abrasion-resistant tintable hard-coating are prepared by a method comprising the following successive steps of
(i) coating a transparent organic polymer substrate with a thin layer of a heat-curable composition containing components (A) to (D), and optionally (E), such as described above,
(ii) heating the substrate coated with the heat-curable composition to a temperature of at least 70 °C, preferably of 75 °C to 90 °C, for at least 5 minutes, preferably for 10 to 20 minutes, so as to form a tack-free coating,
(iii) heating the optical article with the tack-free coating to a temperature of at least 95 °C, preferably of 100 to 110 °C, for at least two hours, preferably for 2.5 to 3.5 hours, so as to obtain an optical article with a completely cured insoluble hard-coating.

The coating step may be carried out using any suitable coating technique. The coating compositions are preferably applied by dip-coating or spin coating.

The polymer substrate and the final optical article are preferably optical lenses and even more preferably ophthalmic lenses.

The final hard-coatings preferably have a thickness of from 2.9 to 6.5 µm, more preferably of from 4 to 5 µm.

### Example

### Preparation of curable coating compositions

Formulation A and B according to the present invention (see below Table 1) are prepared as follows :
- γ-glycidoxypropyltriethoxysilane (GLYMO) is weighed in a bottle,
- an aqueous solution of HCl (0.1 N) is added dropwise under stirring, and the resulting mixture is left at room temperature under stirring for about 30 minutes for hydrolysis,
- dimethyldiethoxysilane (DMDES) is added dropwise, followed by addition of the tinting additive of formula (Ib) obtained by end capping PTHF having a molecular weight of 250 with 3-isocyanatopropyltriethoxysilane (IPTEOS),
- a 30 wt % suspension of colloidal silica in methanol is added and the mixture is allowed to stir for about 10 minutes,
- after addition of a fluorinated surfactant (FC430, 3M Speciality Chemicals) dissolved in methyl ethyl ketone and curing catalyst (aluminum acetylacetonate), the mixture is stirred for 24 hours,
- the final composition is cooled and stored at 4 °C.

**Table 1**

| ingredient | Formulation A | Formulation B | Formulation C (comparative) |
|---|---|---|---|
| GLYMO (component A) | 16.74 | 15.81 | 18.60 |
| 0.1 N HCl | 5.96 | 5.63 | 6.62 |
| DMDES (component E) | 8.76 | 8.27 | 9.73 |
| Aluminum acetylacetonate (component C) | 1.08 | 1.02 | 1.2 |
| Methyl ethyl ketone | 3.29 | 3.10 | 3.65 |
| FC 430 surfactant | 0.09 | 0.09 | 0.09 |
| SiO₂ colloid in methanol (component B) | 54.09 | 51.09 | 60.1 |
| IPTEOS end-capped PTHF (component D) | 10.00 | 15.00 | -- |
| Total | 100 | 100 | 100 |
| Total solids content | 52.8 | 55 | 48 |

### Coating and curing

Formulations A, B and C containing respectively 10 %, 15 % and 0 % of tint additive (component (D)), were then used, after conditioning to room temperature, for coating CR-39 lens substrates.

Before coating, the substrates were submitted to an adhesion-promoting surface treatment by immersion for 5 - 10 minutes in an aqueous solution of 3-aminopropyltriethoxysilane (5 wt %) and exposure to ultrasound. After rinsing with deionized water and drying (5 minutes at 75 °C) the lenses were cooled to room temperature.

The coating compositions according to the present invention (formulations A and B of Table 1) as well as two comparative formulations (Formulation C of Table 1 and the product TC 322 marketed by SDC) were applied by spin-coating to the surface-treated lenses in an amount sufficient for a cured coating thickness of about 3 - 6 µm.

The coated lenses were first heated for 15 minutes at 75 °C so as to form a tack-free coating, followed by post-curing for 3 hours at 105 °C.

### Assessment of tintability and abrasion resistance

Tintability: BPI Black was used as a dye to evaluate the tintability of the coatings. BPI Black was mixed at volume ratio of 1:10 with water and stirred for several minutes to get a homogenous solution. Said dye solution was heated to 91 °C and maintained at this temperature for 30 minutes. The coated lenses and an uncoated CR-39 lens (thermoset poly(diethylene glycol bis-allylcarbonate)) were immersed together in the heated dye solution using a lens holder. When the transmission of the uncoated CR-39 lens reached 20 % (normally after about 8 minutes), all lenses were taken out, rinsed with deionized water, dried and assessed for transmission. The transmission data at the second line of Table 2 (20 % T Transmittance (%)) correspond to the transmittance of the coated lenses attained when the transmittance of the uncoated CR-39 lens was 20 %. Low 20 % T Transmittance values are indicative of a good tintability. The transmittance data at the third line of Table 2 have been measured on the coated lenses before the dying step.

### Abrasion resistance:

Abrasion resistance was assessed by the BAYER test carried out according to ISTM 06-002. A high BAYER value is indicative of a high abrasion resistance.

Coating adherence: The coating adherence of the coatings before and after dying was tested according to ISTM 02-010.

The coatings were cut with a cutter made of six blades into a crosshatched grid, adhesive tapes were then applied to the cut coating and were torn off perpendicularly to the surface, with a sharp, rapid, even and continuous movement towards the lens centre. Tests were carried out on five samples which were then sent for assessment.

**Table 2**

| | **Coatings according to the invention** | | **Comparative coatings** | |
|---|---|---|---|---|
| | **Formulation A** | **Formulation B** | **Formulation C** | **TC 332** |
| tint additive concentration | 10% | 15 % | 0% | |
| 20%T transmittance | 64 % | 54 % | 73 % | 58 % |
| Transmittance before dying | 89 % | 90% | 93.3 % | 91.5 % |
| ISTM Bayer | 1.7 | 1.9 | 2.9 | 0.95 |
| Adhesion of non tinted coatings (Class) | 0 | 0 | 0 | 0 |
| Adhesion of tinted coatings (Class) | 0 | 0 | 0 | 0 |
| Thickness of cured hardcoat (µm) | 5 | 6 | 3.5 | 5 |

The above data clearly demonstrate that the coating compositions of the present invention lead to hard-coatings having both a satisfying tintability (20%T transmittance) equivalent to prior art compositions, and a better abrasion resistance (1.7 and 1.9 compared to 0.95).

## Claims

1. Heat-curable coating composition which, upon curing, forms a transparent tintable abrasion-resistant coating, said heat-curable coating composition comprising, in an aqueous or hydro-organic solvent:
(A) a hydrolysate of an epoxy-functional silane compound containing at least two alkoxy groups,
(B) colloidal silica having an average particle diameter of 1 to 100 µm,
(C) an aluminium chelate compound of formula
Al(O-C₁₋₄alkyl)ₙY₃₋ₙ
wherein n is 0, 1 or 2 and Y is a ligand selected from the group consisting of M-C(=O)-CH₂-C(=O)-M and
M-C(=O)-CH₂-C(=O)O-M,
wherein each M is independently a C₁₋₄ alkyl group, and
(D) a hydrolysate of a silylated poly(tetrahydrofurane) of formula (Ia) or (Ib) 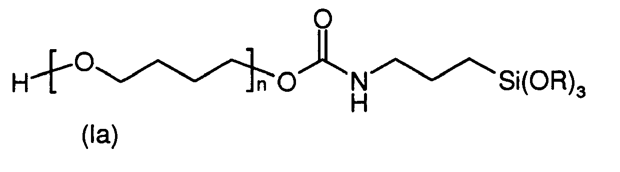 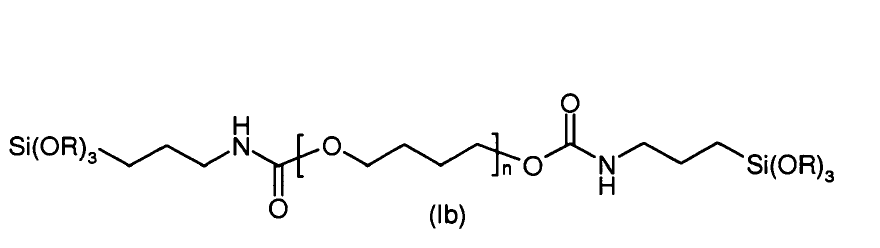
wherein n is an integer selected from 10 to 20 and each R is independently a C₁₋₅ alkyl group, preferably a methyl or ethyl group, or a C₁₋₅ acyl group,
said heat-curable composition not containing any multifunctional cross-linking agents selected from the group consisting of multifunctional carboxylic acids and multifunctional anhydrides.

2. Heat-curable coating composition according to claim 1, wherein the hydrolysate of an epoxy-functional silane compound is selected from a hydrolysate of a silane compound containing three alkoxy groups directly bonded to the silicon atom and one epoxy-functional group bonded to the silicon atom via a Si-C bond.

3. Heat-curable coating composition according to claim 2, wherein the epoxy-functional silane compound has the following formula 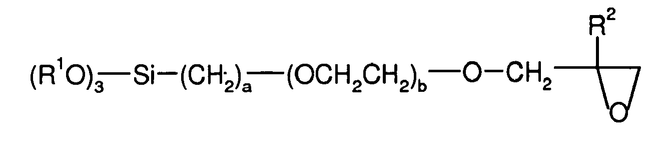 wherein each R¹ is independently a C₁₋₄ alkyl group, preferably a methyl or ethyl group, R² is a methyl group or hydrogen atom, a is an integer from 1 to 6, and b is 0, 1 or 2.

4. Heat-curable coating composition according to claim 3, wherein the epoxy-functional silane compound is γ-glycidoxypropyltrimethoxysilane.

5. Heat-curable coating composition according to any of claims 1 to 4, further containing (E) at least one hydrolysate of a silane compound of formula SiT₂Z₂ where each T is an organic group which, upon hydrolysis, gives a silanol group, preferably a C₁₋₁₀ alkoxy group, and each Z is an organic group non reactive with regard to the components of the composition, bonded to the silicon atom via a Si-C bond, preferably a C₁₋₁₀ alkyl group or a C₆₋₁₀ aryl group.

6. Heat-curable coating composition according to claim 5, wherein the silane compound of formula SiT₂Z₂ is selected from the group consisting of dimethyldimethoxysilane, dimethyldiethoxysilane and methylphenyldimethoxysilane.

7. Heat-curable coating composition according to any of claims 1 to 6, wherein the following proportions by weight of the components (A), (B), (C), (D) and (E) based on the total weight of composition are:
5 to 25 % parts of (A)
10 to 30 % of (B)
0.2 to 2 % of (C)
2 to 20 % of (D),
optionally 1 to 10 % of (E).

8. Composition according to any of claims 1 to 7, said composition containing at least 1 % by weight of water.

9. Composition according to any of claims 1 to 8, wherein the total solids content of the composition is from 30 to 70 % by weight, preferably from 40 to 60 % by weight.

10. Composition according to any of claims 1 to 9, wherein the silica component (B) comprises from 40 to 60 % by weight, preferably from 45 to 55 % by weight of the total solids of the composition.

11. A method for forming an abrasion-resistant hard-coating on a transparent substrate, said method comprising the successive steps of
(i) coating a transparent organic polymer substrate with a thin layer of a heat-curable composition such as defined in any of claims 1 to 10,
(ii) heating the coated substrate with the heat-curable composition to a temperature of at least 70 °C, preferably of 75 °C to 90 °C, for at least 5 minutes, so as to form a tack-free coating,
(iii) heating the optical article with the tack-free coating to a temperature of at least 95 °C, preferably of 100 to 110 °C, for at least two hours, preferably for 2.5 to 3.5 hours, so as to obtain an optical article with a completely cured insoluble hard-coating.

12. The method according to claim 11, wherein, in step (i), the substrate is coated with the heat-curable composition by spin coating or dip coating.

13. An optical article comprising a clear, insoluble hard-coating resulting from the heat-curing of a heat-curable composition according to any of claims 1 to 10.

14. The optical article according to claim 16, wherein the final hard-coating has a thickness of from 2.9 to 6.5 µm, preferably of from 4 to 5 µm.

15. The optical article according to claims 13 or 15, said article being an ophthalmic lens.

## Patentansprüche

1. Wärmehärtbare Beschichtungszusammensetzung, die beim Härten eine transparente färbbare abriebfeste Beschichtung bildet, wobei die wärmehärtbare Beschichtungszusammensetzung in einem wässrigen oder hydroorganischen Lösungsmittel enthält:
(A) ein Hydrolysat einer zumindest zwei Alkoxygruppen enthaltenden Epoxy-funktionalen Silanverbindung,
(B) fluidförmiges Silika, das einen durchschnittlichen Partikeldurchmesser von 1 bis 1 00pm hat,
(C) eine Aluminium-Chelat-Verbindung der Formel
Al(O-C₁₋₄-Alkyl)ₙY₃₋ₙ,
wobei n 0, 1 oder 2 ist, und Y ein Ligand ist, ausgewählt aus der Gruppe bestehend aus
M-C(=O)-CH₂-C(=O)-M und
M-C(=O)-CH₂-C(=O)O-M,
worin jedes M unabhängig eine C₁₋₄-Alkylgruppe ist, und
(D) ein Hydrolysat eines silylierten Poly-(Tetrahydrofurans) der Formel (la) oder (Ib) 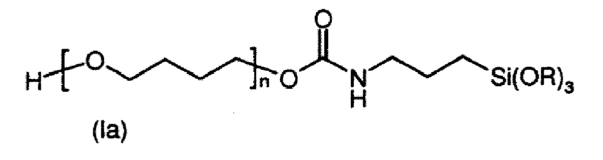 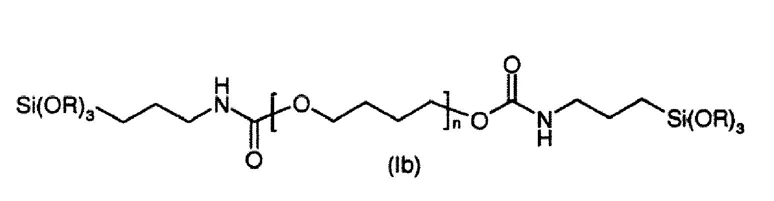 wobei n eine ganze Zahl ausgewählt aus 10 bis 20 ist, und jedes R unabhängig eine C₁₋₅-Alcylgruppe, bevorzugt eine Methyl- oder Ethylgruppe, oder eine C₁₋₅-Acylgruppe ist,
wobei die wärmehärtbare Zusammensetzung keine multifunktionalen Vernetzungsmittel enthält, die aus der Gruppe ausgewählt sind, die aus multifunktionalen Carboxylsäuren und multifunktionalen Anhydriden besteht.

2. Wärmehärtbare Beschichtungszusammensetzung nach Anspruch 1, worin das Hydrolysat einer Epoxy-funktionalen Silanverbindung ausgewählt ist aus einem Hydrolysat einer Silanverbindung, die drei Alkoxygruppen enthält, die direkt an das Siliziumatom gebunden sind, und einer Epoxy-funktionalen Gruppe, die über eine Si-C-Verbindung an das Siliziumatom gebunden ist.

3. Wärmehärtbare Beschichtungszusammensetzung nach Anspruch 2, worin die Epoxy-funktionale Silanverbindung die folgende Formel hat 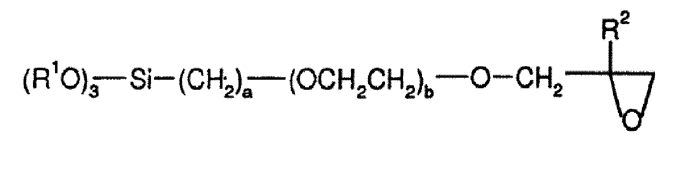 worin R¹ unabhängig eine C₁₋₄-Alkylguppe, bevorzugt eine Methyl- oder Ethylgruppe ist, R² eine Methylgruppe oder ein Wasserstoffatom ist, a eine ganze Zahl von 1 bis 6 ist, und b 0,1 oder 2 ist.

4. Wärmehärtbare Beschichtungszusammensetzung nach Anspruch 3, worin die Epoxy-funktionale Silanverbindung, γ-Glycidoxypropyltrimethoxysilan ist.

5. Wärmehärtbare Beschichtungszusammensetzung nach einem der Ansprüche 1 bis 4, die ferner enthält (E) zumindest ein Hydrolysat einer Silanverbindung der Formel SiT₂Z₂, wobei jedes T eine organische Gruppe ist, die bei Hydrolyse eine Silanolgruppe ergibt, bevorzugt eine C₁₋₁₀-Alkoxygruppe, und jedes Z eine organische Gruppe ist, die nicht reaktiv in Bezug auf die Komponenten der Zusammensetzung ist, die an das Siliziumatom über eine Si-C-Verbindung gebunden ist, bevorzugt eine C₁₋₁₀-Alkylgruppe oder eine C₆₋₁₀-Arylgruppe.

6. Wärmehärtbare Beschichtungszusammensetzung nach Anspruch 5, worin die Silanverbindung der Formel SiT₂Z₂ aus der Gruppe ausgewählt ist, bestehend aus Dimethyldimethoxysilan, Dimethyldiethoxysilan und Methylphenyldimethoxysilan.

7. Wärmehärtbare Beschichtungszusammensetzung nach einem der Ansprüche 1 bis 6, worin die folgenden Gewichtsanteile der Komponenten (A), (B), (C), (D) und (E) basierend auf dem Gesamtgewicht aus der Zusammensetzung sind: 5 bis 25 %-Teile von (A),
10 bis 30 % von (B),
0,2 bis 2 % von (C),
2 bis 20% von (D),
optional 1 bis 10 % von (E).

8. Zusammensetzung nach einem der Ansprüche 1 bis 7, wobei die Zusammensetzung zumindest 1 Gewichts-% Wasser enthält.

9. Zusammensetzung nach einem der Ansprüche 1 bis 8, worin der Gesamtfeststoffgehalt der Zusammensetzung von 30 bis 70 Gewichts-%, bevorzugt von 40 bis 60 Gewichts-% ist.

10. Zusammensetzung nach einem der Ansprüche 1 bis 9, worin die Silikakomponente (B) von 40 bis 60 Gewichts-%, bevorzugt von 45 bis 55 Gewichts-% der Gesamtfeststoffe der Zusammensetzung enthält.

11. Verfahren zur Bildung einer abriebfesten harten Beschichtung auf einem transparenten Substrat, wobei das Verfahren die aufeinander folgenden Schritte umfasst:
(i) Beschichten eines transparenten organischen Polymersubstrats mit einer dünnen Schicht einer wärmehärtbaren Zusammensetzung wie in einem der Ansprüche 1 bis 10 definiert,
(ii) Erwärmen des beschichteten Substrats mit der wärmehärtbaren Zusammensetzung auf eine Temperatur von wenigstens 70°C, bevorzugt 75°C bis 90°C für wenigstens 5 Minuten, um eine nichtklebrige Beschichtung zu bilden,
(iii) Erwärmen des optischen Gegenstands mit der nicht-klebrigen Beschichtung auf eine Temperatur von wenigstens 95°C, bevorzugt 100 bis 110°C für wenigstens zwei Stunden, bevorzugt 2,5 bis 3,5 Stunden, um einen optischen Artikel mit einer vollständig gehärteten unlöslichen harten Beschichtung zu erhalten.

12. Das Verfahren nach Anspruch 11, worin im Schritt (i) das Substrat mit der wärmehärtbaren Zusammensetzung durch Schleuderbeschichtung oder Tauchbeschichtung beschichtet wird.

13. Optischer Artikel, der eine klare, unlösliche, harte Beschichtung aufweist, die aus der Wärmehärtung einer wärmehärtbaren Zusammensetzung nach einem der Ansprüche 1 bis 10 resultiert.

14. Der optische Artikel nach Anspruch 16, worin die fertige harte Beschichtung eine Dicke von 2,9 bis 6,5µm, bevorzugt von 4 bis 5 µm hat.

15. Der optische Artikel nach den Ansprüchen 13 oder 15, wobei der Artikel eine ophtalmische Linse ist.

## Revendications

1. Composition de revêtement thermodurcissable qui, sous l'effet du durcissement, forme un revêtement transparent, pouvant être coloré et résistant à l'abrasion, ladite composition de revêtement thermodurcissable comprenant, dans un solvant aqueux ou hydro-organique :
(A) un hydrolysat d'un composé silane à fonctionnalité époxy contenant au moins deux groupes alcoxy,
(B) de la silice colloïdale ayant un diamètre moyen de particules de 1 à 100 µm,
(C) un composé chélaté d'aluminium de formule
Al(O-alkyl en C₁₋₄)ₙ Y₃₋ₙ
dans laquelle n vaut 0, 1 ou 2 et Y est un ligand choisi dans le groupe constitué de
M-C(=O)-CH₂-C(=O)-M et
M-C(=O)-CH₂-C(=O)O-M,
dans lesquels chaque M est indépendamment un groupe alkyle en C₁₋₄, et
(D) un hydrolysat d'un poly(tétrahydrofurane) silylé de formule (Ia) ou (Ib) 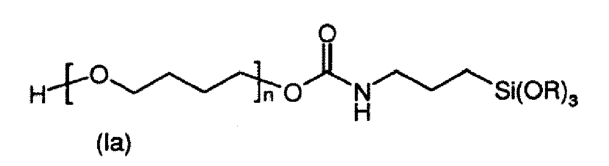 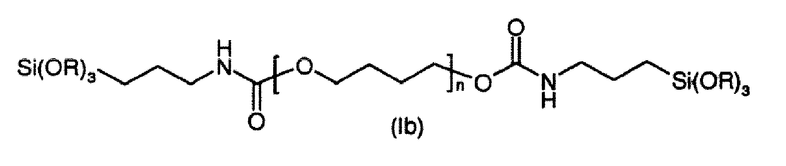
dans lesquelles n est un nombre entier choisi de 10 à 20 et chaque R est indépendamment un groupe alkyle en C₁₋₅, de préférence un groupe méthyle ou éthyle, ou un groupe acyle en C₁₋₅,
ladite composition thermodurcissable ne contenant pas d'agent de réticulation multifonctionnel choisi dans le groupe constitué des acides carboxyliques multifonctionnels et des anhydrides multifonctionnels.

2. Composition de revêtement thermodurcissable selon la revendication 1, dans laquelle l'hydrolysat d'un composé silane à fonctionnalité époxy est choisi parmi un hydrolysat d'un composé silane contenant trois groupes alcoxy directement liés à l'atome de silicium et un groupe à fonctionnalité époxy lié à l'atome de silicium via une liaison Si-C.

3. Composition de revêtement thermodurcissable selon la revendication 2, dans laquelle le composé silane à fonctionnalité époxy a la formule suivante 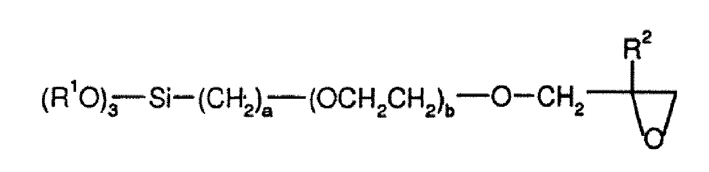 dans laquelle chaque R¹ est indépendamment un groupe alkyle en C₁₋₄, de préférence un groupe méthyle ou éthyle, R² est un groupe méthyle ou un atome d'hydrogène, a est un nombre entier de 1 à 6, et b vaut 0, 1 ou 2.

4. Composition de revêtement thermodurcissable selon la revendication 3, dans laquelle le composé silane à fonctionnalité époxy est un γ-glycidoxypropyltriméthoxysilane.

5. Composition thermodurcissable selon l'une quelconque des revendications 1 à 4, contenant en outre (E) au moins un hydrolysat d'un composé silane de formule SiT₂Z₂ où chaque T est un groupe organique qui, sous l'effet de l'hydrolyse, donne un groupe silanol, de préférence un groupe alcoxy en C₁₋₁₀, et chaque Z est un groupe organique non réactif relativement aux composants de la composition, lié à l'atome de silicium via une liaison Si-C, de préférence un groupe alkyle en C₁₋₁₀ ou un groupe aryle en C₆₋₁₀.

6. Composition de revêtement thermodurcissable selon la revendication 5, dans laquelle le composé silane de formule SiT₂Z₂ est choisi dans le groupe constitué du diméthyldiméthoxysilane, du diméthyldiéthoxysilane et du méthylphényldiméthoxysilane.

7. Composition thermodurcissable selon l'une quelconque des revendications 1 à 6, dans laquelle les proportions suivantes en poids des composants (A), (B), (C), (D) et (E), en se basant sur le poids total de la composition, sont :
5 à 25 % de (A)
10 à 30 % de (B)
0,2 à 2 % de (C)
2 à 20 % de (D),
facultativement 1 à 10 % de (E).

8. Composition selon l'une quelconque des revendications 1 à 7, ladite composition contenant au moins 1 % en poids d'eau.

9. Composition selon l'une quelconque des revendications 1 à 8, dans laquelle la teneur totale en matières solides de la composition est de 30 à 70 % en poids, de préférence de 40 à 60 % en poids.

10. Composition selon l'une quelconque des revendications 1 à 9, dans laquelle le composant de silice (B) constitue de 40 à 60 % en poids, de préférence de 45 à 55 % en poids, des matières solides totales de la composition.

11. Procédé de formation d'un revêtement dur et résistant à l'abrasion sur un substrat transparent, ledit procédé comprenant les étapes successives consistant à
(i) revêtir un substrat polymère organique transparent d'une couche fine de composition thermodurcissable selon l'une quelconque des revendications 1 à 10,
(ii) chauffer le substrat revêtu de la composition thermodurcissable à une température d'au moins 70°C, de préférence de 75°C à 90°C, pendant au moins 5 minutes, pour former un revêtement non collant,
(iii) chauffer l'article optique avec le revêtement non collant à une température d'au moins 95°C, de préférence de 100°C à 110°C, pendant au moins deux heures, de préférence pendant 2,5 à 3,5 heures, de manière à obtenir un article optique avec un revêtement dur et insoluble complètement durci.

12. Procédé selon la revendication 11, dans lequel, dans l'étape (i), le substrat est revêtu de la composition thermodurcissable par dépôt à la tournette ou par dépôt par trempage.

13. Article optique comprenant un revêtement transparent, insoluble et dur résultant du thermodurcissement d'une composition thermodurcissable selon l'une quelconque des revendications 1 à 10.

14. Article optique selon la revendication 16, dans lequel le revêtement dur final a une épaisseur de 2,9 à 6,5 µm, de préférence de 4 à 5 µm.

15. Article optique selon la revendication 13 ou 15, ledit article étant une lentille ophtalmique.
